# EUROPÄISCHE PATENTANMELDUNG

(11) **EP 0 688 957 A1**
(43) Veröffentlichungstag der Anmeldung: **27.12.1995**
(21) Anmeldenummer: 95107730.4
(22) Anmeldetag: 19.05.1995
(51) Int. Cl.: F15B 13/00, F15B 21/02, E05B 65/38, B60R 16/08, G05B 19/042

(54) **Pneumatischer Bus**

(30) Priorität: 24.05.1994 DE 4418055
(71) Anmelder: WOCO Franz-Josef Wolf & Co., D-63628 Bad Soden-Salmünster (DE); Alcatel SEL Aktiengesellschaft, D-70435 Stuttgart (DE); MERCEDES-BENZ AG, D-70322 Stuttgart (DE)
(72) Erfinder: Wolf, Franz Josef, D-63628 Bad Soden-Salmünster (DE); Reichert, Uwe, D-36381 Schüchtern (DE); Feichtiger, Dieter, D-71134 Aidlingen (DE); Lindmayer, Martin, D-72172 Sulz (DE); Heinle, Dieter, D-73655 Plüderhausen (DE); Decker, Walter, D-91575 Windsbach (DE); Demling, Frank, D-90765 Fürth (DE); Ogrissek, Andrew, D-90403 Nürnberg (DE)
(74) Vertreter: Jaeger, Klaus, Dr.

(57) **Zusammenfassung**

Eine insbesondere für den Kraftfahrzeugbau vorgesehene Vorrichtung zum Steuern und Stellen prinzipiell beliebig vieler Stellglieder ist durch eine elektropneumatische Busleitung (1) gekennzeichnet, an die alle zu erfassenden Stellglieder (5,6,7) in beliebiger Reihenfolge sowohl pneumatisch als auch elektrisch angeschlossen sind. Die elektropneumatische Busleitung (1) besteht aus mindestens einer pneumatischen Stelldruckleitung (2) und einer gegebenenfalls auch mehradrigen elektrischen Steuersignalleitung (3). Unter Führung durch eine über die elektrische Steuersignalleitung (3) der elektropneumatischen Busleitung (1) von einer zentralen Steuerelektronik (4) übermittelten Solldaten werden die einzelnen Stellglieder (5,6,7) über zugeordnete Ventile im pneumatischen System mit der pneumatischen Stelldruckleitung (2) der elektropneumatischen Busleitung (1) verbunden. Die Stellglieder (5,6,7) sind dabei vorzugsweise als modulare Regelkreissysteme aufgebaut. Dadurch sind die pneumatisch angetriebenen Stellorgane (11,20,21) nicht nur binär stellbar sondern auch analog oder quasi analog stellbar und regelbar.

## Beschreibung

Die Erfindung betrifft eine Vorrichtung zum Steuern und Stellen von insbesondere mehreren Stellgliedern.

Speziell betrifft die Erfindung eine Vorrichtung zum Steuern und Stellen von Stellgliedern in Kraftfahrzeugen. Solche Stellglieder sind beispielsweise Klappen, Schieber oder Ventile der unterschiedlichsten Art, beispielsweise einer Anlage zur Klimatisierung des Innenraums eines Kraftfahrzeuges, Verriegelungen unterschiedlichster Art, beispielsweise eines Zentralverriegelungssystems, oder Einstellmechanismen, beispielsweise eine Scheinwerfer-Leuchtweiteneinstellung oder eine Sitzeinstellung.

In der Kraftfahrzeugtechnik werden Stellglieder dieser Art üblicherweise entweder pneumatisch oder elektrisch angesteuert und betätigt.

Vorrichtungen zum elektromotorischen Steuern und Stellen erfordern die Verwendung kostenintensiver Baugruppen und belasten die elektrische Stromversorgung im Kraftfahrzeug in unwirtschaftlicher Weise.

Vorrichtungen zum pneumatischen Steuern und Stellen sind kostengünstiger als elektromotorische Vorrichtungen, arbeiten leise und zuverlässig, ohne die Stromversorgung des Kraftfahrzeugs zu belasten, erfordern jedoch durch die aufwendigen pneumatischen Leitungssysteme einen beachtlichen Montageaufwand und sind in aller Regel nur binär zwischen zwei Grenzstellungen der Stellglieder stellbar.

Im Rahmen dieses Standes der Technik ist auch ein Verriegelungssystem bekannt geworden, das elektrisches und pneumatisches Steuern und Stellen dadurch zu kombinieren versucht, daß die einzelnen Stellglieder individuell mit elektrisch beaufschlagbaren Pumpen ausgerüstet sind, die bei Ansteuerung den zum Stellen des Stellgliedes erforderlichen pneumatischen Stelldruck erzeugen. Durch ein solches System kann zwar der Montageaufwand der pneumatischen Leitungsverlegung eingespart werden, bleiben aber die Kosten und Betriebsgeräusche der Stellglieder.

Ausgehend von diesem Stand der Technik liegt der Erfindung die Aufgabe zugrunde, eine Vorrichtung zum Steuern und Stellen von mindestens einem, insbesondere zum Steuern und Stellen mehrerer Stellglieder, speziell für den Kraftfahrzeugbau, zu schaffen, die bauraumsparend mit geringem Montageaufwand realisierbar ist und die Einstellung auch von Zwischenstellungen mittels pneumatischer Antriebe ermöglicht.

Zur Lösung dieser Aufgabe schafft die Erfindung eine Vorrichtung zum Steuern und Stellen, die die im Anspruch 1 genannten Merkmale aufweist.

Kern der Erfindung ist demnach die Schaffung einer elektropneumatischen Busleitung, an die alle zu versorgenden Stellglieder angeschlossen werden. Im Gegensatz zum herkömmlichen pneumatischen Stellen und Steuern im Kraftfahrzeug wird also nicht mehr jedes einzelne Stellglied mit einer eigenen separaten pneumatischen Leitung verbunden, sondern wird eine einzige Busleitung ausgelegt, an die die zu erfassenden Stellglieder vorzugsweise durch Stecken, prinzipiell an beliebiger Stelle anschließbar sind. Dies wird durch eine elektrische Signalleitung ermöglicht, die nach der Maßgabe der einzelnen Stellanforderung der einzelnen Stellglieder das Öffnen oder Schließen der pneumatisch angetriebenen Stellglieder in den Bus hinein steuert.

Diese elektrische Steuersignalleitung der elektropneumatischen Busleitung kann einadrig oder mehradrig ausgelegt sein, je nachdem, ob die elektrischen Steuersignale seriell oder parallel übertragen werden sollen.

Die elektrischen Steuersignalleitungen sind vorzugsweise mit der pneumatischen Stelldruckleitung derart integriert, daß die Leiteradern in oder auf dem Mantel der pneumatischen Stelldruckleitung eingeschlossen oder aufgeschweißt sind. Dabei kann das Einarbeiten der elektrischen Signalleitungen in die pneumatische Stelldruckleitung beispielsweise im Extruder beim Herstellen der pneumatischen Stelldruckleitung erfolgen. Alternativ kann die elektrische Signalleitung vorher separat mit einem elektrisch isolierenden Mantel umgeben werden, der dann beim Extrudieren der pneumatischen Leitung auf diese unter Temperaturbedingungen aufgeführt wird, daß ein Verschweißen zwischen Signalleitungsmantel und dem Mantel der pneumatischen Stelldruckleitung erfolgt. Im einfachsten Fall kann jedoch die elektrische Steuersignalleitung auch ohne unmittelbare physikalische Verbindung neben der pneumatischen Stelldruckleitung verlegt sein oder nur durch punktuelle Anbindung, beispielsweise durch Kabelschellen, mit dieser funktionell zur elektropneumatischen Busleitung verbunden sein.

Vorzugsweise wird die elektropneumatische Busleitung jedoch als integriertes Leitungssystem ausgebildet, und zwar insbesondere steckbar. Die Steckbarkeit ist dabei vorzugsweise so ausgelegt, daß beim Zusammenstecken der Elemente, die eine Steckverbindung bilden, gleichzeitig sowohl eine pneumatische Verbindung als auch eine elektrische Verbindung erfolgt. Bei mehradriger Ausbildung der elektrischen Steuersignalleitung kann durch an sich bekannte Maßnahmen, beispielsweise eine Nut-Feder-Führung zwischen Stecker und Buchse, ohne Aufwand auch ein adergenaues Steckverbinden des elektropneumatischen Busleitungssystems erreicht werden.

Die einzelnen Stellglieder, die aus der elektropneumatischen Busleitung versorgt werden sollen, sind vorzugsweise in Modultechnik als Baugruppen ausgebildet, und zwar mit jeweils einem elektronischen Regler, der an die elektrische Steuersignalleitung der elektropneumatischen Busleitung anschließbar ist, mit einem Ventil, das an die pneumatische Stelldruckleitung der elektropneumatischen Busleitung anschließbar ist, mit einem pneumatischen Stellantrieb, der über das Ventil vom Bus pneumatisch beaufschlagbar ist, und mit einem Sensor zur Aufnahme der Betriebszustandsdaten des Stellantriebs und/oder des von diesem gestellten Stellorgans und zur Übermittlung der aus diesen Daten gebildeten Betriebszustandssignale an den Regler, der aus diesen Ist-Signalen und den vom Bus übergebenen Soll-Signalen ein Steuersignal zum Ansteuern des Modulventils bildet.

Die elektrische Steuersignalleitung der elektropneumatischen Busleitung wird in der Regel von einer zentralen Steuerelektronik versorgt, die die Soll-Daten für die vorzugsweise einzeln adressierbaren Stellglieder übermittelt. Dabei kann der pneumatische Teil des elektropneumatischen Bussystems so ausgebildet sein, daß die pneumatische Stelldruckleitung entweder ständig mit Stelldruck aus einer Stelldruckquelle beaufschlagt ist, oder, alternativ, bedarfsweise über ein Zentralventil, das von der zentralen Steuerelektronik ansteuerbar ist, mit Stelldruck beaufschlagbar oder belüftbar ist. Im zuletzt genannten Fall kann das Modulventil als einfaches 2/3-Wege-Ventil ausgebildet sein, während bei ständiger Stelldruckbeaufschlagung des elektropneumatischen Bussystems die Stellelemente durch 3/3-Wege-Ventile einzeln belüftbar ausgebildet sein müssen.

Weitere Ausgestaltungen der Erfindung sind Gegenstand der Unteransprüche.

Die Erfindung ist im Folgenden anhand von Ausführungsbeispielen in Verbindung mit den Zeichnungen näher erläutert. Es zeigen
- Fig. 1: ein erstes Ausführungsbeispiel der Erfindung mit einem Zentralventil in der elektropneumatischen Busleitung; und
- Fig. 2: ein zweites Ausführungsbeispiel der Erfindung mit ständiger Unterdruchversorgung der elektropneumatischen Busleitung.

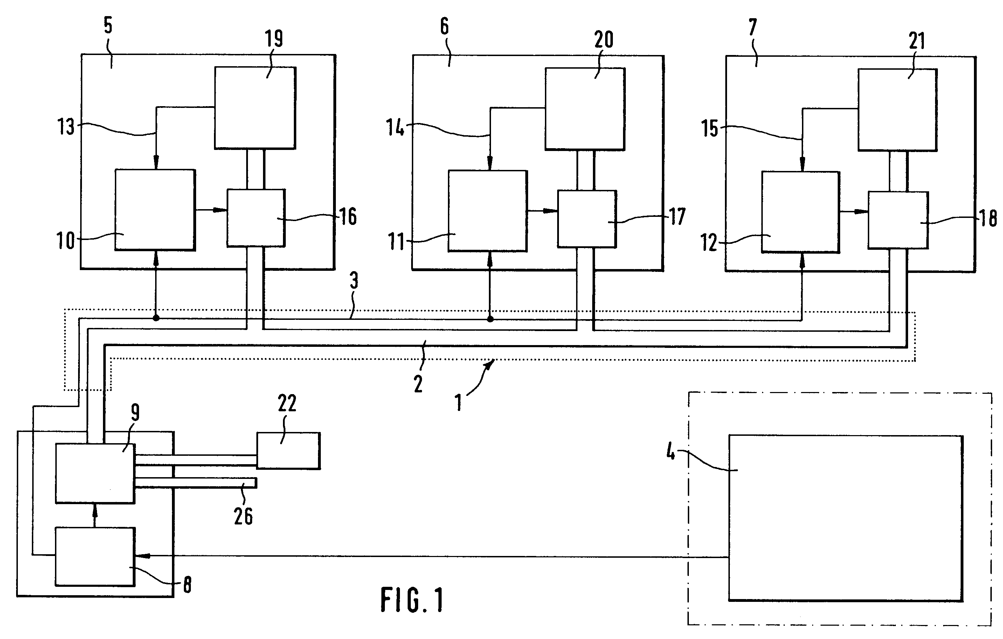

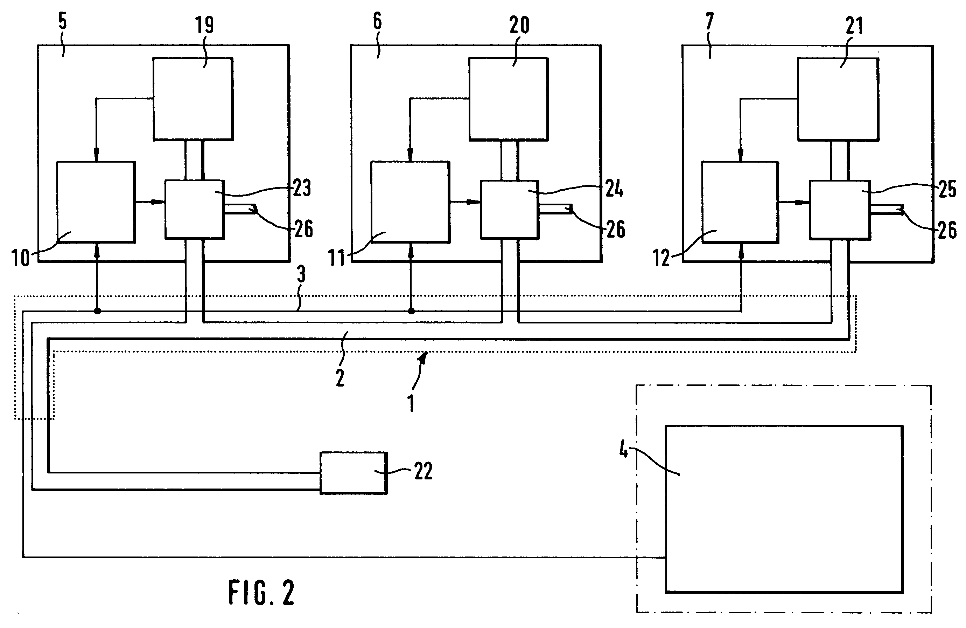

Der in den Fig. 1 und 2 gezeigte elektropneumatische Bus 1 besteht aus einer pneumatischen Stelldruckleitung 2 und einer mehradrigen elektrischen Steuersignalleitung 3.

Die elektrische Steuersignalleitung 3 der elektropneumatischen Busleitung 1 wird von einer zentralen Steuerelektronik 4 mit den Stell-Soll-Signalen für die einzelnen angeschlossenen Stellglieder 5,6,7 beaufschlagt. Die zentrale Steuerelektronik liefert außerdem Steuersignale an die Modulelektronik 8, die ein Zentralventil 9 ansteuert, das die pneumatische Stelldruckleitung 2 der elektropneumatischen Busleitung 1 bedarfsweise mit dem pneumatischen Stelldruck, hier Unterdruck, von einer Stelldruckquelle beaufschlagt oder zum Zwecke der Lüftung mit der Umgebungsatmosphäre verbindet.

In der aus Fig. 1 ersichtlichen Weise ist jedes einzelne Stellgliedmodul 5,6,7 als Regelkreis ausgebildet. Ein Modulregler 10,11,12 ist einerseits mit der elektrischen Steuersignalleitung 3 verbunden, beispielsweise zur Aufnahme und Prüfung der Stellgliedadresse und der mit dieser verbundenen Sollwerte, und ist andererseits mit einer Ist-Wert-Signalleitung 13,14,15 verbunden, die die von einem in den Figuren nicht dargestellten Sensor abgetasteten und umgesetzten Signale des Istzustands des Stellorgans bzw. des Stellantriebs übermitteln. Aus den Vergleichswerten der Soll-Daten und der Ist-Daten bildet der Regler 10,11,12 dann ein Steuersignal für ein mit der jeweiligen Modulbaugruppe integriertes 2/3-Magnetventil 16,17,18, das die Verbindung zwischen der pneumatischen Stelldruckleitung 2 der elektropneumatischen Busleitung 1 mit dem pneumatischen Stellantrieb 19,20,21 für das Stellorgan nach Maßgabe der vom Regler übermittelten Steuerdaten verbindet. Dabei ist auf diese Weise auch ein Nachregeln bzw. Nachstellen der einzelnen Stellorgane über den Modulregelkreis möglich.

Eine Variante des in Fig. 1 gezeigten Bussystems ist der Fig. 2 zu entnehmen. Im Gegensatz zu dem in Fig. 1 gezeigten Ausführungsbeispiel ist die pneumatische Steuerdruckleitung 2 der elektropneumatischen Busleitung 1 ständig mit einer Stelldruckwelle 22, hier einer Unterdruckwelle, verbunden. In den einzelnen Stellgliedern 5,6,7 sind die Modulventile 23,24,25 als 3/3-Magnetventile ausgebildet, die den pneumatischen Stellantrieb 19,20,21 wahlweise mit der pneumatischen Stelldruckleitung 2 der elektropneumatischen Busleitung 1 oder mit einer Lüftungsleitung 26 verbinden. Gegenüber dem in der Fig. 1 gezeigten Ausführungsbeispiel eines elektropneumatischen Bussystems gemäß der Erfindung ermöglicht das in der Fig. 2 gezeigte aufwendigere System ein ständiges und individuelles Verstellen und Nachregeln jedes einzelnen angeschlossenen Stellorgans 5,6,7.

Wenngleich auch in den vorstehend beschriebenen Ausführungsbeispielen der Erfindung gemäß Fig. 1 und 2 lediglich drei angeschlossene Stellglieder dargestellt sind, so ist dem Fachmann ohne weiteres erkennbar, daß zur effektiven Nutzung des elektropneumatischen Bussystems auch eine deutlich größere Anzahl von Stellgliedern, beispielsweise 10,20 oder 30 Stellglieder, an ein solches Bussystem anschließbar sind.

## Patentansprüche

1. Vorrichtung zum Steuern und Stellen von mindestens einem, insbesondere mehrerer Stellglieder, speziell in Kraftfahrzeugen,
**gekennzeichnet** durch
eine elektropneumatische Busleitung, an die alle zu erfassenden Stellglieder sowohl pneumatisch als auch elektrisch angeschlossen sind, wobei die elektropneumatische Busleitung aus mindestens einer pneumatischen Stelldruckleitung und einer elektrischen Steuersignalleitung besteht.

2. Vorrichtung nach Anspruch 1,
**gekennzeichnet** durch
eine elektropneumatische Busleitung, bei der die pneumatische Stelldruckleitung aus Kunststoff besteht und die mindestens eine elektrische Steuersignalleitung elektrisch isoliert in oder auf der äusseren Manteloberfläche der pneumatischen Stelldruckleitung durch Einlegen oder Aufschweissen integriert ist.

3. Vorrichtung nach einem der Ansprüche 1 oder 2,
**gekennzeichnet** durch
eine elektropneumatische Busleitung mit vier bis acht integrierten elektrischen Steuersignalleitungen.

4. Vorrichtung nach einem der Ansprüche 1 bis 3,
**gekennzeichnet** durch
eine elektropneumatische Busleitung mit einer als Koaxialrohr ausgebildeten pneumatischen Stelldruckleitung.

5. Vorrichtung nach einem der Ansprüche 1 bis 4,
**gekennzeichnet** durch
Steckverbindungen zum Anschliessen der Stellglieder und zum Verlängern, Abschliessen oder Verzweigen der elektropneumatischen Busleitung.

6. Vorrichtung nach Anspruch 5,
**gekennzeichnet** durch
eine Ausbildung der Steckverbindungen mit elektropneumatischen Steckern und Buchsen, die ein simultanes elektrisches und pneumatisches Steckverbinden ermöglichen.

7. Vorrichtung nach einem der Ansprüche 1 bis 6,
**gekennzeichnet** durch
die Ausbildung der Stellglieder in Modultechnik mit jeweils einem elektronischen Regler, der an die elektrische Steuersignalleitung der elektropneumatischen Busleitung anschliessbar ist, mit einem Ventil, das an die pneumatische Stelldruckleitung der elektropneumatischen Busleitung anschliessbar ist, mit einem pneumatischen Stellantrieb, der über das Ventil vom Bus pneumatisch beaufschlagbar ist, und mit einem Sensor zur Aufnahme der Betriebszustandsdaten des Stellantriebs und/oder des von diesem gestellten Stellorgans und zur Übermittlung der aus diesen Daten gebildeten Betriebszustandssignale an den Regler, der aus diesen Ist-Signalen und den vom Bus übergebenen Soll-Signalen ein Steuersignal zum Ansteuern des Ventils bildet.

8. Vorrichtung nach einem der Ansprüche 1 bis 7,
**gekennzeichnet** durch
eine zentrale Steuerelektronik, die die Stellorgane über die elektriche Steuersignalleitung der elektropneumatischen Busleitung einzeln und unabhängig voneinander, optional auch gruppenweise, adressieren kann.

9. Vorrichtung nach Anspruch 8,
**gekennzeichnet** durch
ein Zentralventil, das von der zentralen Steuerelektronik ansteurbar ist und die pneumatische Stelldruckleitung der elektropneumatischen Busleitung wahlweise mit Stelldruck aus einer Stelldruckquelle zu beaufschlagen oder zu belüften ermöglicht.

10. Vorrichtung nach Anspruch 8,
**gekennzeichnet** durch
eine pneumatische Stelldruckquelle, die die elektropneumatische Busleitung ständig mit Stelldruck beaufschlagt, und durch Ventile der Stellglied-Module, die ein Belüften der einzelnen Stellorganantriebe bei geschlossenem Buszugang ermöglichen.
